# EUROPEAN PATENT SPECIFICATION

(11) **EP 0 792 837 B1**
(45) Date of publication and mention of the grant of the patent: **23.05.2001**
(21) Application number: 96308634.3
(22) Date of filing: 29.11.1996
(51) Int. Cl.: C01B 31/22, F25J 1/00

(54) **Gas recovery in the production of a chilling medium such as carbon dioxide snow**
Gasrückgewinnung bei der Herstellung von einem Abkühlmedium wie Kohlendioxidschnee
Récupération de gaz dans la production d'une source de froid telle que la neige carbonique

(30) Priority: 27.02.1996 GB 9604082
(43) Date of publication of application: 03.09.1997
(73) Proprietor: The BOC Group plc, Windlesham Surrey GU20 6HJ (GB)
(72) Inventor: Ebling, Jonathan Mark, Windsor, Berkshire SL4 4JG (GB)
(74) Representative: Gough, Peter

(56) References cited:
- EP-A- 0 302 285
- FR-A- 664 665
- GB-A- 298 910

## Description

The present invention relates to a method of recovering gas and relates particularly to a method for recovering gas in a process for the production of a chilling medium, such as carbon dioxide snow, from a liquid gas supply.

Presently known apparatus for the production of carbon dioxide snow include that in which liquid carbon dioxide is fed to a nozzle where the pressure drops to the ambient pressure and dry ice particles form along with a substantial amount of flash gas. As this flash off gas typically comprises around 55% by weight of the original liquid flow, this represents a significant economic loss. Attempts have been made to recover this gas, but problems are encountered with air and moisture contamination.

In an alternative process, liquid carbon dioxide is fed on a cyclic basis into one or other of a pair of injectors. After the injector is loaded, the liquid is flashed down to a pressure between the ambient pressure and the triple point of the gas. In this instance, the pure flash gas is compressed and liquefied so that it can be stored for later use. A mixture of gas and dry ice snow is fired out of the injector and enters, for example, a food freezing tunnel in a manner which facilitates the chilling of any food passing therethrough. However, even recovery of this gas has its problems. For example, the recovery apparatus is often many times larger and more expensive than the snow producing apparatus itself.

It is an object of the present invention to provide a method of recovering gas in a process for the production of a chilling medium from a liquid gas which reduces and possibly eliminates the above-mentioned problems.

Accordingly, the present invention provides, a method of recovering gas in a process for the production of a chilling medium from a liquid gas in a storage vessel in which the chilling medium is created by flashing down the liquid gas from a first, supply, temperature and pressure to a second, use, temperature and pressure, characterised by the steps of flashing down the liquid supply gas to a pressure intermediate the supply pressure and the use pressure and above the triple point of the gas thereby to produce a substantially dry gaseous phase and a liquid phase of said gas; recycling said substantially dry gaseous phase for subsequent use; flashing down the liquid phase from said intermediate pressure to the use pressure thereby to produce a product phase and a gaseous phase and sending said product phase for use as a chilling medium.

Conveniently, the use pressure is substantially atmospheric pressure.

Preferably, the gas is carbon dioxide and the product phase comprises solid carbon dioxide.

Advantageously, the substantially dry gaseous phase forms a recycle phase which is returned to the storage vessel.

Preferably, the recycle phase is compressed and cooled prior to its return to the storage vessel.

Advantageously, the cooling is conducted by periodic heat exchange with a pre-chilled heat sink which is itself chilled by an external refrigeration system.

Alternatively, the cooling may be conducted by a continuous chilling process employing an external refrigeration system.

In one arrangement the recycle phase is compressed prior to its return to the storage tank and cooled after its return thereto.

The recycle phase may be cooled by bubbling it through a quantity of liquid gas within the storage vessel.

Advantageously, the recycle phase is cooled or further cooled by the extraction of gas in its vapour phase and by condensing said vapour in a condenser external of the tank before returning cooled condensate to said tank.

Advantageously, sufficient of the dry gaseous phase produced during flash down is returned to a headspace in the storage vessel to pressurise said headspace and at least compensate for any loss of liquid from the vessel.

Advantageously, the method may include multiple flash down steps for producing gas at various pressures and temperatures.

Conveniently, the method includes the step of warming recycle gas being supplied to the recycle compressor by heat exchange with warmed compressed recycle gas being returned to the storage tank.

The present invention will now be more particularly described by way of example only with reference to the accompanying drawings, in which:
Figure 1 is a diagrammatic representation of flash down steps of the prior art;
Figure 2 is a diagrammatic representation of the flash down steps of the present invention;
Figures 3 to 6 are schematic representations of alternative forms of the apparatus associated with the present invention; and
Figure 7 is a schematic representation of a recycle chilling arrangement.

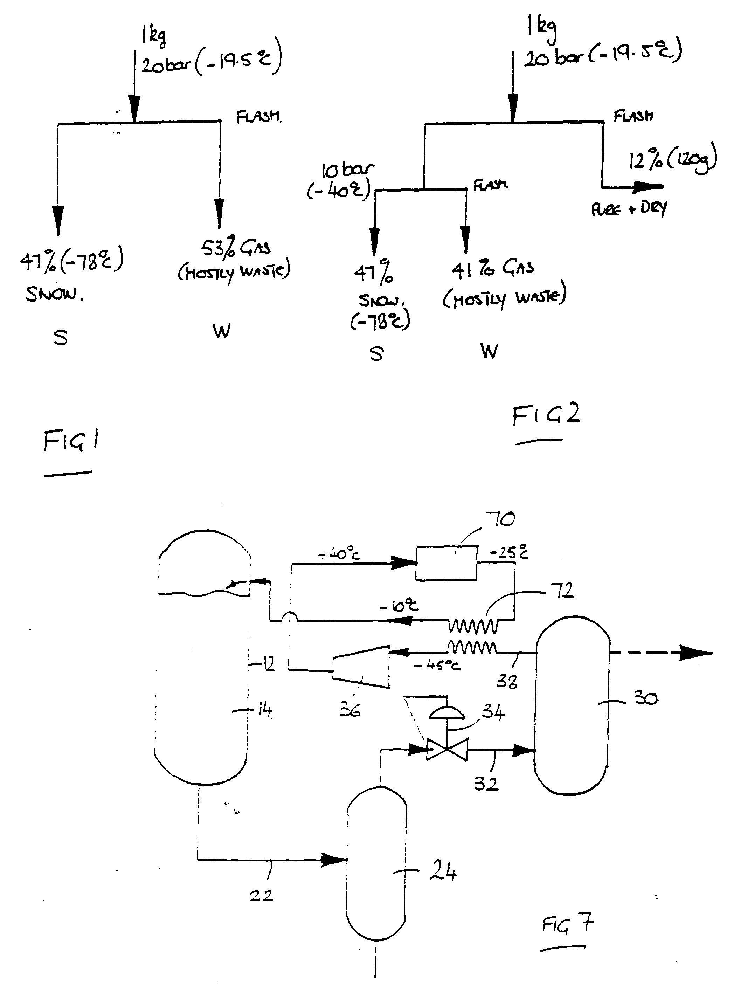

From Figure 2 it will be appreciated that the present invention provides a two-stage flash down (expansion) of CO₂ from its normal supply pressure and temperature. The first flash down takes the gas to a pressure intermediate the supply pressure and the triple point of the gas and thereby produces a substantially dry gaseous phase and a liquid phase of said gas. The dry gas phase is easily recovered in any one of a number of ways for subsequent use in the same or different processes. The remaining liquid phase is further expanded by one or more expansion steps until it produces a 'product phase' of solid carbon dioxide S and a waste gas phase W. As will be appreciated from Figure 2, 1kg of liquid carbon dioxide when flashed down in this manner will result in approximately 47% of the gas being turned into useful product phase, approximately 12% dry recoverable gas and approximately 41% waste gas. This is in stark contrast with the prior art process of Figure 1 which, due to its single step flash down produces the same amount of product phase and a balance of 53% low pressure gas which may become contaminated with moisture. Clearly, the advantage of the present invention resides in its ability to produce the same quantity of product phase whilst still being able to provide a significant quantity of recoverable dry gas. A twelve percent saving in any cryogenic chilling medium will have a significant impact on the economics of any chilling process.

It will be appreciated that the 10 bar intermediate flash down pressure of the Figure 2 example is merely one example of a suitable pressure. In fact, any one of a number of intermediate pressures may be employed so long as they are above the triple point of the cryogenic liquid. In the case of carbon dioxide, this is 5.18 bar abs and -56°C. Below the triple point no liquid is present, and control of the process is much more complicated as it is discontinuous. If desirable, it is possible to flash down in a number of steps, each of which would provide liquid and gas phases for use or recovery

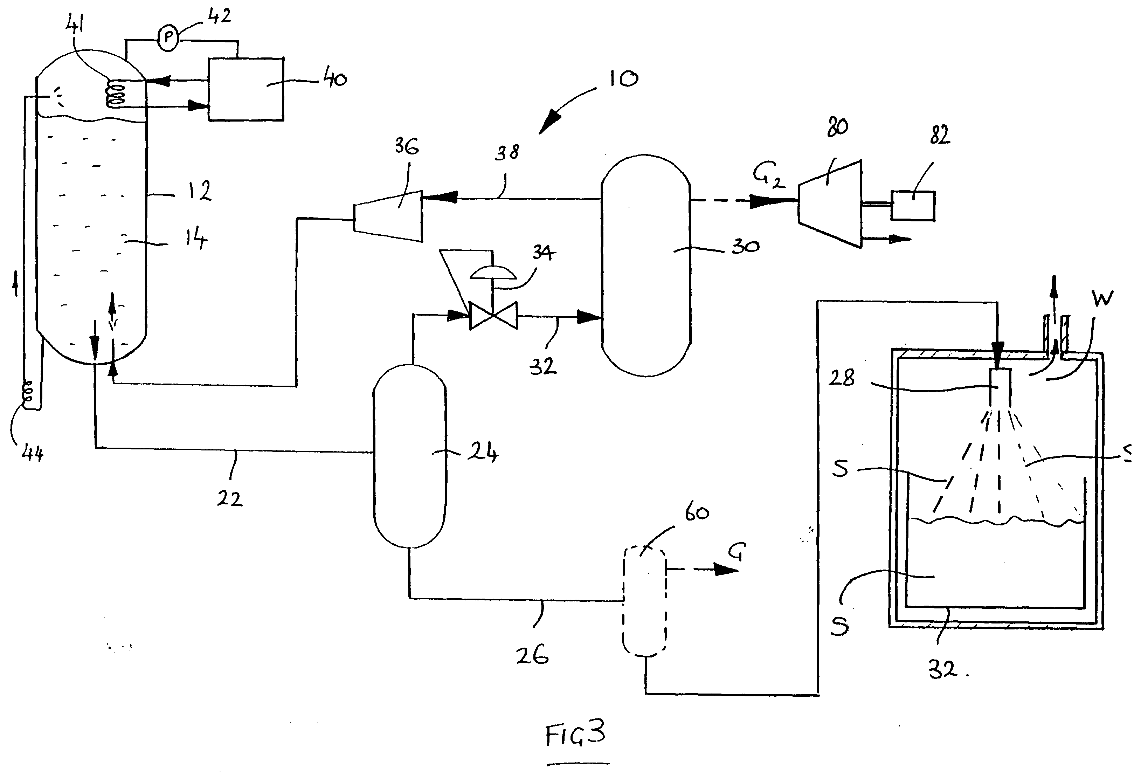

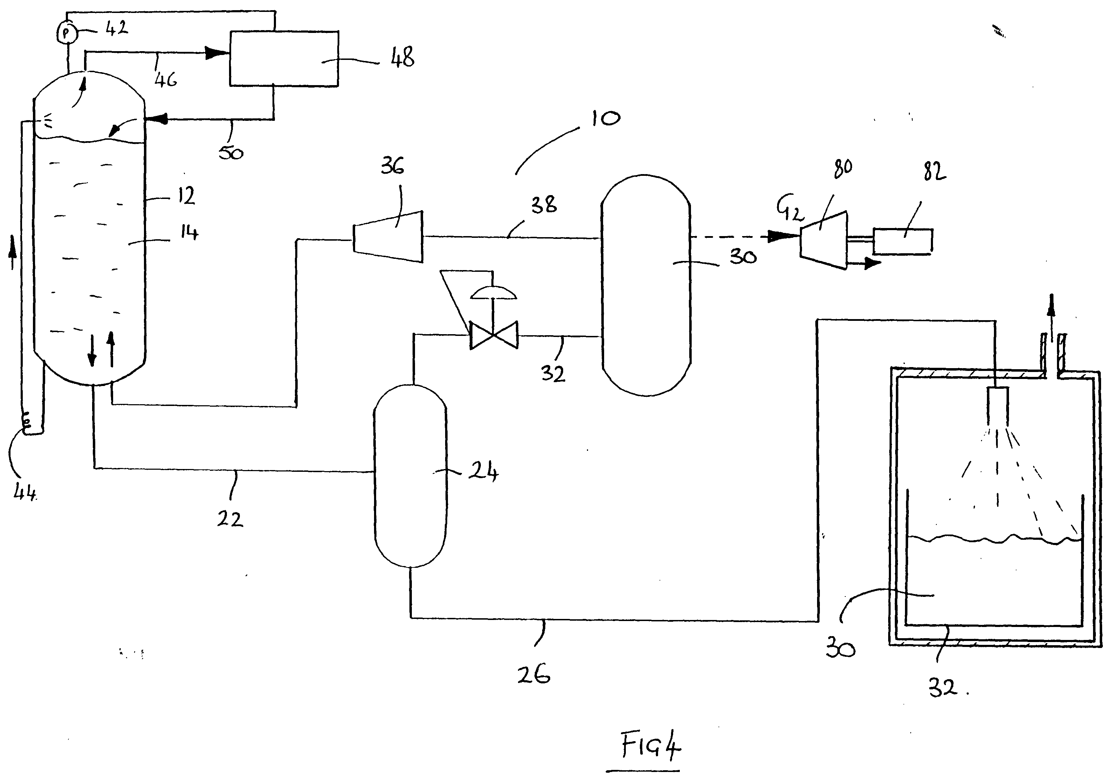

Figures 3 to 6 illustrate various forms of apparatus suitable for use in accordance with the method of the present invention. In Figure 3 there is shown an apparatus 10 comprising a storage tank 12 for the storage of liquid cryogen 14 at, for example, 20 bar and -19.5°C. A supply line 22 leads to an intermediate flash down device connected to, for example, phase separator 24. A simple expansion valve (not shown) would prove suitable. One kg of liquid CO₂ when expanded to an intermediate pressure of 10 bar abs would create 88% liquid phase and 12% dry, easily recovered, gas phase. The liquid phase being at about -40°C. A further liquid supply line 26 is employed to direct the liquid phase to a second flash down apparatus in the form of, for example, a snow horn 28 configured for creating solid carbon dioxide snow S and for directing it for immediate use or into container 32 for subsequent use. Dry gaseous phase is directed to buffer vessel 30 via line 32 and control valve 34 before being directed to compressor 36 via line 38. This dry feed gas is already at 6 to 10 bar and, being uncontaminated by moisture or air, can be compressed to the same pressure as that in storage tank 12 before being returned to supplement the liquid therein. In the Figure 3 embodiment, returned gas is re-injected into the storage tank at the base thereof and allowed to pass through the bulk of liquid contained therein. In effect, the liquid in the storage tank 12 acts as a heat sink and would result in the tank pressure P rising marginally during the re-injection, and falling as fridge 40 cuts in. In operation, it would be possible to set the fridge pressure switch 42 to a comparatively low value thus allowing the pressure in vessel 12 to vary between, say, 15 and 22 bar over the course of either the day or week. These variations in tank pressure would not affect the process throughput, as the phase separator 26 will hold the process feed steady at the preset pressure. Tank pressure may be maintained by employing a pressure building coil 44 through which a portion of cryogenic liquid 14 is passed and converted to gaseous phase before being returned to the head space within the vessel 12. Coil 44 may be eliminated if compressor 36 is able to supply sufficient recovered gas to replace that being provided by vaporising coil 44. The fridge 40 would then be required only to cool the gas to -18°C, and not to liquefy it. Such an arrangement would require somewhere in the region of 5% of the liquid gas to be recovered and returned to the tank for pressurisation purposes. In situations where larger quantities of dry gaseous phase are being recycled, it will be necessary to provide a significantly larger refrigeration system than that discussed above. One possible solution would be to increase the size and capacity of chilling coils 41 and refrigeration apparatus 40 such that it has sufficient capacity to liquefy all, or nearly all, the dry gaseous phase being returned to the vessel 12. This arrangement is limited in a practical sense by the space occupied by coils 41 in the headspace of the vessel 12. Consequently, if it is necessary to provide cooling beyond that obtainable in the Figure 3 embodiment, one might simply employ an external condenser coil arrangement as shown in Figure 4. In this arrangement, cryogenic gas is removed from the headspace via line 46 and directed to an external condenser arrangement shown schematically at 48. Condensed gas is returned in its liquid form to the headspace of the tank via line 50. Clearly, this arrangement allows for a chilling capacity much greater than that possible with internal cooling coils 41.

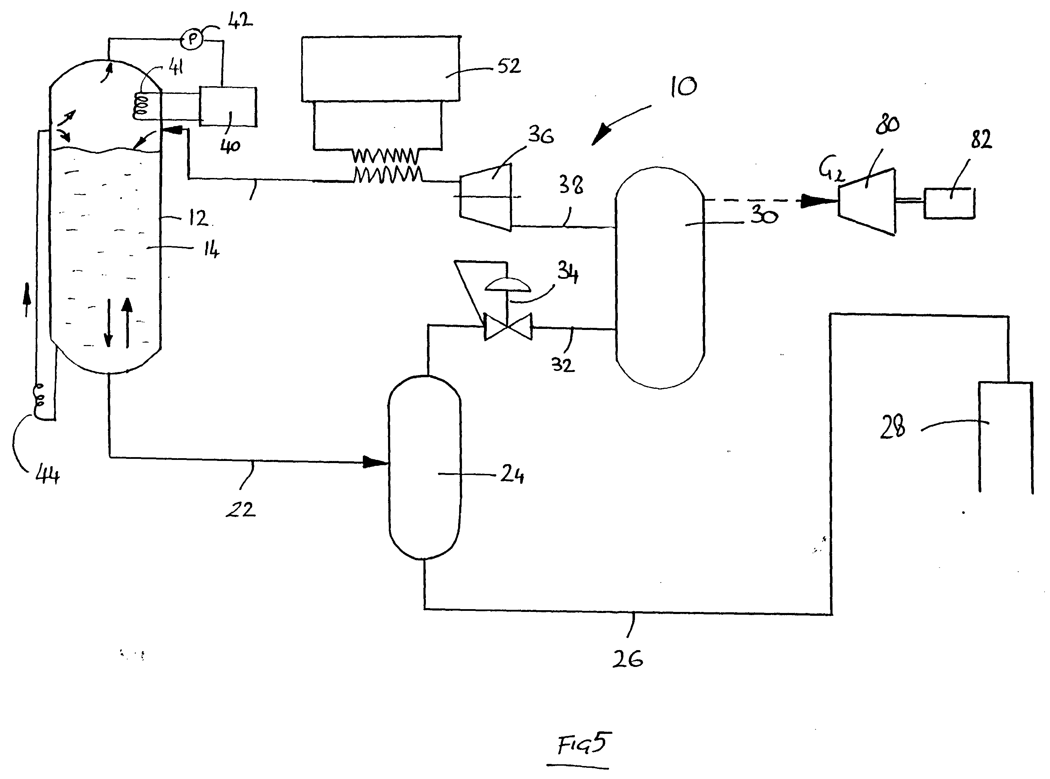

An alternative to the above is shown in Figure 5 in which a large capacity refrigeration system 52 is employed to cool the entire flow of compressed recycled gas before it is returned to storage tank 12. The capacity of this refrigeration system must be sufficient to cool the gas to substantially the same temperature as that contained in the storage tank 12 itself. While such an arrangement can prove fairly advantageous when apparatus 10 is operated in a continuous mode, it will be appreciated that the costs associated with starting up such a large capacity refrigeration system might prevent this arrangement being used for batch operation.

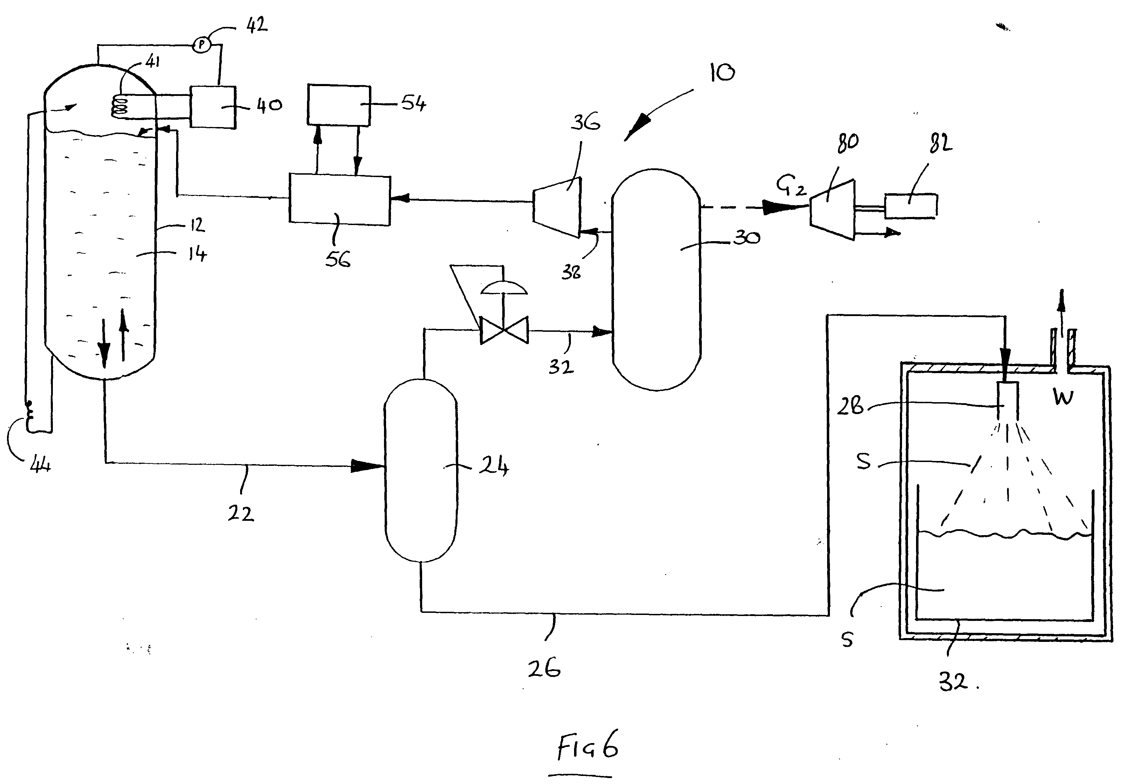

Figure 6 overcomes the problems associated with batch processing by providing a significantly smaller refrigeration system 54 than that shown in Figure 5. The smaller refrigeration system 54 is employed to chill low temperature thermal mass 56 over or through which the returning recycled gas is passed before being directed to the storage tank 12. In operation, the comparatively small and hence economic refrigeration system 54 is continuously operated to cool the thermal mass material 56 which is in turn employed to cool the gas returning from compressor 36. In effect, the temperature of the thermal mass material 56 could rise during the chilling of a batch of returning gas but will return to its earlier low temperature when no gas is being passed therethrough. Such an arrangement significantly reduces the costs associated with refrigeration system shown in Figure 5.

The thermal mass could be a eutectic, a fluid which may be circulated or stirred, or a solid or a combination thereof.

Operation of the above arrangements may be varied in any one of a number of different ways. For example, liquid gas may be flashed down a number of stages such as for example as shown at 60 in Figure 3. This secondary or supplementary flash down will result in a gaseous phase G and a liquid phase which is subsequently directed to snow horn apparatus 28. The gaseous phase G may be directed for use in one or other processes adjacent apparatus 10. A further advantage of this arrangement is that the heat load of any refrigeration or chilling apparatus associated with recycled dry gaseous phase is significantly reduced as there is less recycle gas, thereby allowing a greater degree of sub-cooling to take place. Figure 3 also illustrates an embodiment where a dry gaseous phase G₂ is extracted from storage vessel 30. Such an arrangement also assists in reducing the quantity of recycled gas being compressed by compressor.36 and is particularly advantageous if there is a local requirement for a dry gaseous phase.

A further modification to the above described arrangements is shown in figure 7. Cold flash gas is warmed by heat exchange with compressed recycle gas which has been through an aftercooler. The warm flash gas is compressed in compressor 3C, cooled in an aftercooler 91, and then further cooled by heat exchange with the cold flash gas before passing to the refrigeration apparatus 70. Such an arrangement maximises the amount of cooling in the aftercooler, and minimises the refrigeration load.

## Claims

1. A method of recovering gas in a process for the production of a chilling medium from a liquid gas in a storage vessel in which the chilling medium is created by flashing down the liquid gas from a first, supply, temperature and pressure to a second, use, temperature and pressure, characterised by the steps of:
flashing down the liquid supply gas to a pressure intermediate the supply pressure and the use pressure and above the triple point of the gas thereby to produce a substantially dry gaseous phase and a liquid phase of said gas;
recycling said substantially dry gaseous phase for subsequent use;
flashing down the liquid phase from said intermediate pressure to the use pressure thereby to produce a product phase and a gaseous phase and sending said product phase for use as a chilling medium.

2. A method as claimed in Claim 1 in which the use pressure is substantially atmospheric pressure.

3. A method as claimed in Claim 1 or Claim 2 in which the gas is carbon dioxide and the product phase comprises solid carbon dioxide.

4. A method as claimed in any one of Claims 1 to 3 in which the substantially dry gaseous phase forms a recycle phase which is returned to the storage vessel.

5. A method as claimed in Claim 4 in which the recycle phase is compressed and cooled prior to its return to the storage vessel.

6. A method as claimed in Claim 5 in which the cooling is conducted by periodic heat exchange with a pre-chilled heat sink which is itself chilled by an external refrigeration system.

7. A method as claimed in Claim 5 in which the cooling is conducted by a continuous chilling process employing an external refrigeration system.

8. A method as claimed in any one of Claims 1 to 4 in which the recycle phase is compressed prior to its return to the storage tank and cooled after its return thereto.

9. A method as claimed in Claim 8 in which the recycle phase is cooled by bubbling it through a quantity of liquid gas within the storage vessel.

10. A method as claimed in Claim 8 or Claim 9 in which the recycle phase is cooled or further cooled by the extraction of gas in its vapour phase and by condensing said vapour in a condenser external of the tank before returning cooled condensate to said tank.

11. A method as claimed in any one of the preceding claims in which sufficient of the dry gaseous phase produced during flashing down is returned to a headspace in the storage vessel to pressurise said headspace and at least compensate for any loss of liquid from a the vessel.

12. A method as claimed in any one of the preceding claims including multiple flash down steps for producing gas and liquid at various pressures and temperatures.

13. A process as claimed in any one of the previous claims including the step of warming recycle gas being supplied to the recycle compressor by heat exchange with warm compressed recycle gas being returned to the storage tank.

## Patentansprüche

1. Verfahren zur Rückgewinnung von Gas in einem Prozeß zur Erzeugung eines Kühlmediums aus einem Flüssiggas in einem Speicherbehälter, in welchem das Kühlmedium durch Entspannung des Flüssiggases von einem jeweils ersten verbrauchsseitigen Temperatur- und Druckwert auf einen jeweils zweiten verwendungsseitigen Temperatur- und Druckwert überführt wird, gekennzeichnet durch die Schritte:
Entspannen des zugeführten Flüssiggases auf einen Druck zwischen dem Zuführdruck und dem Verwendungsdruck und oberhalb des Tripelpunkts des Gases, um so eine im wesentlichen trockene Gasphase und eine Flüssigkeitsphase des Gases zu erzeugen,
Rezirkulieren der im wesentlichen trockenen Gasphase für nachfolgende Verwendung,
Entspannen der Flüssigkeitsphase von dem Zwischendruck auf den Verwendungsdruck, um dadurch eine Produktphase und eine Gasphase zu erzeugen, und Weiterleiten der Produktphase zur Verwendung als Kühlmedium.

2. Verfahren nach Anspruch 1, wobei der Verwendungsdruck im wesentlichen Atmosphärendruck ist.

3. Verfahren nach Anspruch 1 oder 2, wobei das Gas Kohlendioxid ist und die Produktphase festes Kohlendioxid enthält.

4. Verfahren nach einem der Ansprüche 1 bis 3, wobei die im wesentlichen trockene Gasphase eine Rezirkulationsphase bildet, die in den Speicherbehälter zurückgeleitet wird.

5. Verfahren nach Anspruch 4, wobei die Rezirkulationsphase vor ihrer Rückführung in den Speicherbehälter komprimiert und gekühlt wird.

6. Verfahren nach Anspruch 5, wobei das Kühlen durch periodischen Wärmeaustausch mit einem vorgekühlten Wärmesumpf durchgeführt wird, der seinerseits durch ein externes Kühlsystem gekühlt wird.

7. Verfahren nach Anspruch 5, wobei das Kühlen mittels eines kontinuierlichen Kühlprozesses unter Einsatz eines externen Kühlsystems durchgeführt wird.

8. Verfahren nach einem der Ansprüche 1 bis 4, wobei die Rezirkulationsphase vor ihrer Rückführung in den Speichertank komprimiert und nach ihrer Rückführung in diesen gekühlt wird.

9. Verfahren nach Anspruch 8, wobei die Rezirkulationsphase durch Aufsteigenlassen durch ein Quantum Flüssigkeit in dem Speicherbehälter gekühlt wird.

10. Verfahren nach Anspruch 8 oder 9, wobei die Rezirkulationsphase durch Abziehen von Gas in seiner Dampfphase und durch Kondensieren des Dampfs in einem bezüglich des Tanks externen Kondensator gekühlt oder weiter gekühlt wird, bevor gekühltes Kondensat in den Tank zurückgeführt wird.

11. Verfahren nach einem der vorhergehenden Ansprüche, wobei ausreichend viel der während der Entspannung erzeugten trockenen Gasphase in einen Kopfraum des Speicherbehälters zurückgeführt wird, um den Kopfraum unter Druck zu setzen und mindestens einen Flüssigkeitsverlust aus dem Behälter zu kompensieren.

12. Verfahren nach einem der vorhergehenden Ansprüche, mit mehrfachen Entspannungsschritten zum Erzeugen von Gas und Flüssigkeit unter verschiedenen Drücken und Temperaturen.

13. Verfahren nach einem der vorhergehenden Ansprüche, mit dem Schritt des Erwärmens von zum Rezirkulationsverdichter zugeführten Rezirkulationsgas durch Wärmeaustausch mit warmem komprimierten Rezirkulatinsgas, das zum Speichertank zurückgeführt wird.

## Revendications

1. Procédé de récupération de gaz dans un procédé de production d'un milieu réfrigérant à partir d'un gaz liquide dans un récipient de stockage dans lequel le milieu réfrigérant est créé par détente brusque du gaz liquide d'une première température et pression d'alimentation à une seconde température et pression d'utilisation, caractérisé par les étapes de :
détente brusque du gaz d'alimentation liquide jusqu'à une pression intermédiaire entre la pression d'alimentation et la pression d'utilisation, et supérieure au point triple du gaz, afin de produire ainsi une phase gazeuse sensiblement sèche et une phase liquide dudit gaz ;
recyclage de ladite phase sensiblement sèche pour utilisation ultérieure ;
abaissement brusque de la phase liquide de ladite pression intermédiaire à la pression d'utilisation afin de produire une phase produit et une phase gazeuse, et envoi de ladite phase produit pour utilisation comme milieu réfrigérant.

2. Procédé selon la Revendication 1, dans lequel la pression d'utilisation est sensiblement la pression atmosphérique.

3. Procédé selon la Revendication 1 ou la Revendication 2, dans lequel le gaz est l'anhydride carbonique et la phase produit comprend de la neige carbonique.

4. Procédé selon l'une quelconque des Revendications 1 à 3, dans lequel la phase gazeuse sensiblement sèche forme une phase de recyclage qui est renvoyée au récipient de stockage.

5. Procédé selon la Revendication 4, dans lequel la phase de recyclage est comprimée et refroidie avant son retour vers le récipient de stockage.

6. Procédé selon la Revendication 5, dans lequel le refroidissement est réalisé par échange de chaleur périodique avec un dissipateur de chaleur prérefroidi qui est lui-même refroidi par un système de réfrigération externe.

7. Procédé selon la Revendication 5, dans lequel le refroidissement est réalisé par un procédé de refroidissement continu utilisant un système de réfrigération externe.

8. Procédé selon l'une quelconque des Revendications 1 à 4, dans lequel la phase de recyclage est comprimée avant son retour vers le réservoir de stockage et refroidie après son retour dans celui-ci.

9. Procédé selon la Revendication 8, dans lequel la phase de recyclage est refroidie par barbotage à travers un volume de gaz liquide à l'intérieur du récipient de stockage.

10. Procédé selon la Revendication 8 ou la Revendication 9, dans lequel la phase de recyclage est refroidie ou davantage refroidie par l'extraction de gaz dans sa phase vapeur et par condensation de ladite vapeur dans un condenseur extérieur au réservoir avant de renvoyer le condensat refroidi audit réservoir.

11. Procédé selon l'une quelconque des Revendications précédentes dans lequel une quantité suffisante de la phase gazeuse sèche produite pendant la détente est renvoyée à un espace libre de tête du récipient de stockage pour mettre sous pression ledit espace libre et à tout le moins compenser toute perte de liquide du récipient.

12. Procédé selon l'une quelconque des Revendications précédentes comprenant des étapes de détente multiples pour produire du gaz et du liquide à diverses pressions et températures.

13. Procédé selon l'une quelconque des Revendications précédentes comprenant l'étape de réchauffage du gaz de recyclage fourni au compresseur de recyclage par échange de chaleur avec du gaz de recyclage comprimé chaud renvoyé au réservoir de stockage.
